(19) **Europäisches Patentamt**
**European Patent Office**
**Office européen des brevets**

(11) **EP 4 779 827 A1**

(12) **EUROPEAN PATENT APPLICATION**

(43) Date of publication:
**22.07.2026 Bulletin 2026/30**

(21) Application number: **25152180.3**

(22) Date of filing: **16.01.2025**

(51) International Patent Classification (IPC):
**H02H 3/38** (2006.01)   **H02H 3/40** (2006.01)
**H02H 7/26** (2006.01)

(52) Cooperative Patent Classification (CPC):
**H02H 3/405; H02H 3/382; H02H 3/387; H02H 3/40; H02H 7/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **GE Vernova Technology GmbH**
**5400 Baden (CH)**

(72) Inventors:
- **CHAKRAPANI, Venkatesh**
  **ST16 1WS Stafford (GB)**
- **VOLOH, Ilia**
  **L6C 0M1 Ontario (CA)**
- **ZHANG, Zhiying**
  **L6C 0M1 Ontario (CA)**
- **HORTON, Patricia**
  **ST16 1WS Stafford (GB)**

(74) Representative: **Openshaw & Co.**
**8 Castle Street**
**Farnham, Surrey GU9 7HR (GB)**

(54) **SYSTEMS AND METHODS TO SECURE DISTANCE ELEMENTS NEAR UNCONVENTIONAL SOURCES**

(57) There is provided a computer-implemented method (300) of controlling a relay for an electrical line. The method (300) comprises providing (308a), a control signal for tripping one or more components of the electrical line if a fault is determined and all of a plurality of supervisory checks are determined to be satisfied, or, providing (308b) the control signal if an apparent impedance enters into and remains within a third characteristic for a predetermined period of time. A first supervisory check (307a) comprises determining the apparent impedance has entered into a second characteristic. A second supervisory check (307b) comprises determining a first difference, the first difference being based on a positive sequence voltage angle and a positive sequence current angle; determining a rate of change of the first difference; and determining that a magnitude of the rate of change of the first difference is less than a first threshold value. A third supervisory check (307c) comprises determining, based on positive sequence voltage angles of present and previously stored positive sequence voltage phasors or positive sequence voltage samples, a second difference; and determining that a magnitude of the second difference is less than a second threshold value. A fourth supervisory check (307d) comprises determining a directionality based on an emulated electromechanical disk behaviour; and determining the directionality satisfies a preset direction.

Figure 3

## Description

Field

The subject matter herein relates generally to the field of power transmission networks and more specifically to the functionality of relays in power transmission networks.

Introduction

Distance relaying, a century old approach, is still a popular choice for protecting electrical lines across the globe (such as electrical transmission lines or sub-transmission lines). Distance relaying elements or 'distance elements' refer to the impedance-based algorithms deployed within relays to monitor and protect the electrical lines. Such algorithms attempt to determine where along an electrical line a fault is occurring and then issue control signals to trip the relevant circuit breakers to isolate the faulty section of line. These techniques were developed during an era when synchronous machines were used for power generation, and where voltage and current characteristics were relatively predictable during disturbances based on the physics of synchronous machines.

Summary

In the modern era, renewable technologies are increasingly penetrating power systems across the globe, interfaced via power electronics and having their own proprietary control algorithms. This, combined with non-standardization of grid codes, presents a significant challenge for relays to monitor, detect and isolate faults.

During fault conditions, non-coherent voltage and current signals and time varying harmonics can be observed. Legacy distance elements and techniques can struggle to respond to such fault conditions in modern power systems, leading to a failure to isolate faults, healthy electrical lines being tripped inadvertently, and even leading to black out conditions where large geographic areas are left without power.

Other techniques for identifying faults in electrical lines include current differential or high frequency-based methods. These techniques tend to require a separate communication channel to be maintained whilst the fault identification is being performed. This tends to render such techniques vulnerable to loss or interruption of the communication channel. In contrast, the use of distance element techniques does not require a separate communication channel for operation, with the technique is fundamentally operable using the local-end voltage and current signal characteristics of the electrical line received at the relay itself.

Accordingly, it is desirable to provide a method for controlling a relay that mitigates these issues.

According to a first aspect, there is provided a computer-implemented method of controlling a relay for an electrical line.

The method comprises monitoring the electrical line by measuring a three-phase voltage signal and a three-phase current signal of the electrical line.

The method further comprises obtaining (i.e., determining), based on the three-phase voltage signal and the three-phase current signal: a positive sequence voltage phasor and a positive sequence current phasor; or at least one positive sequence voltage sample and at least one positive sequence current sample. The one or more sequence quantities of the three-phase voltage signal and the three-phase current signal as referred to herein may comprise at least one of: a currently measured value or a memorized value of the positive sequence voltage phasor or positive sequence voltage sample; a currently measured value or a memorized value of a negative sequence voltage phasor or negative sequence voltage sample; a currently measured value or a memorized value of a zero sequence voltage phasor or zero sequence voltage sample; a currently measured value or a memorized value of the positive sequence current phasor or positive sequence current sample; a currently measured value or a memorized value of a negative sequence current phasor or negative sequence current sample; and a currently measured value or a memorized value of a zero sequence current phasor or zero sequence current sample. The one or more sequence quantities may comprise a combination of the beforementioned parameters.

The method further comprises storing at least the positive sequence voltage phasor or the at least one positive sequence voltage sample.

The method further comprises determining first, second and third characteristics of the relay, wherein the first, second and third characteristics are based at least partly on one or more stored distance settings of the relay, one or more sequence quantities of the three-phase voltage signal and the three-phase current signal, and one or more phase quantities of the three-phase voltage signal and the three-phase current signal, wherein the first characteristic is a circular MHO characteristic or quadrilateral characteristic, wherein the second characteristic is a static circular MHO supervisory offset zone characteristic or static quadrilateral supervisory offset zone characteristic, wherein the third characteristic is a time-delayed circular MHO offset zone characteristic or time-delayed quadrilateral offset zone characteristic.

The method further comprises monitoring, based on the one or more sequence quantities and the one or more phase quantities, an apparent impedance seen by the relay.

The method further comprises determining a fault when the apparent impedance enters the first characteristic of the relay.

The method further comprises determining whether a plurality of supervisory checks are satisfied, the plurality of supervisory checks being based at least partly on the one or more sequence quantities and the one or more phase quantities.

The method further comprises providing, a control signal for tripping one or more components of the electrical line if the fault is determined and all of the plurality of supervisory checks are determined to be satisfied, or, providing the control signal if the apparent impedance enters into and remains within the third characteristic for a certain period of time.

The determining the plurality of supervisory checks are satisfied comprises determining a first supervisory check by determining the apparent impedance has entered into the second characteristic.

The determining the plurality of supervisory checks are satisfied comprises determining a second supervisory check by: determining a first difference, the first difference being based on a positive sequence voltage angle and a positive sequence current angle, wherein the positive sequence voltage angle is based on the positive sequence voltage phasor and the positive sequence current angle is based on the positive sequence current phasor, or the positive sequence voltage angle is based on the at least one positive sequence voltage sample and the positive sequence current angle is based on the at least one positive sequence current sample; determining a rate of change of the first difference; and determining that a magnitude of the rate of change of the first difference is less than a first threshold value.

The determining the plurality of supervisory checks are satisfied comprises determining a third supervisory check by: determining, based on the positive sequence voltage angles of present and previously stored positive sequence voltage phasors or positive sequence voltage samples, a second difference; and determining that a magnitude of the second difference is less than a second threshold value.

The determining the plurality of supervisory checks are satisfied comprises determining a fourth supervisory check by: determining a directionality based on an emulated electromechanical disk behavior; and determining the directionality satisfies a preset direction.

The inventors have found that existing distance relays or distance element algorithms can be augmented with one or more supervisory checks to mitigate the maloperation of a distance relay. In particular, if the supervisory checks are satisfied the distance element can be permitted to trip one or more poles i.e., the circuit breakers of an electrical line. This tends to improve security of the distance element to enable operation under conditions where the distance element reliably isolates the unhealthy or faulty portions of electrical lines. Four such supervisory checks are proposed herein to be used to improve the security of the distance element in a relay.

Traditionally, in a distance element/technique, an impedance characteristic is determined/set by a user which is a zone bordered by resistance and reactance settings. The impedance characteristic, referred to herein as the first characteristic. If a monitored apparent impedance of an electrical line (i.e., a power transmission line) falls within the impedance characteristics, the user desires the relay to act to isolate the faulty section of electrical line. If the apparent impedance is outside the impedance characteristic of the first characteristic, a fault condition has not been established and the user does not wish the relay to act to isolate the electrical line.

The first supervisory check proposed herein provides an additional static impedance characteristic (i.e., for a circle or Mho characteristic, the diameter is static and does not change, or for a quad i.e., quadrilateral the dimensions are static and do not change). This additional static impedance characteristic is referred to herein as a second characteristic and is an offset (non-directional) supervisory zone impedance characteristic. Offset impedance characteristics herein is referred to a characteristic which can be programmed to respond to line faults both in the forward and reverse direction. The first characteristic set by a user can be dynamic i.e., change over time during the fault. However, because the second impedance characteristic is static, the distance element may not trigger or output the control signal merely as a result of the apparent impedance observed by the relay being within the first characteristic (the predetermined characteristic determined/set by a user). The output of the control signal is dependent upon the monitored apparent impedance also being within the second characteristic (the static offset supervisory zone impedance characteristic). Expressed differently, the automatic tripping of circuit breakers on an electrical line cannot occur until at least the apparent impedance is within both the first characteristic (set by the user in the distance element) and within the second characteristic for the first supervisory check.

It is understood that voltage and current phasors have a magnitude and angle which can be represented as a complex number. In the second supervisory check proposed herein, a positive sequence voltage angle and positive sequence current angle are monitored. In particular the positive sequence voltage angle and positive sequence current angle are used to determine a first difference i.e., the positive sequence voltage angle minus the positive sequence current angle. The rate of change of the first difference is monitored to determine whether the electrical line is experiencing a frequency excursion leading to the angles changing at different rates. The traditional distance element in a relay tends to struggle to operate properly when the positive sequence voltage and positive sequence current angles are changing drastically. This tends to occur when a frequency excursion is being experienced, which tends to be related to the increasing penetration of power electronics in modern power supply systems. Hence, if a frequency excursion is not being experienced during a fault condition, then the rate of change of the first difference will be low i.e., stable. In such a scenario, the second supervisory check will be satisfied and a traditional distance element of the relay can be relied upon to more securely identify and isolate the relevant faulty parts of the electrical line. In the alternative, the distance element tends not to be reliable and thus the second supervisory check is not satisfied, to mitigate maloperation of the distance element of the relay.

Relays tend to store received signals in analog (i.e., filter) or digital memory. Relays may for instance store a history of five cycles of signal data. In the third supervisory check proposed herein, the positive sequence voltage angle is monitored. Upon determining a fault/disturbance, the stored i.e., pre-fault angle is determined (from the memory of the relay). The pre-fault angle may be determined 2 cycles before the fault. Similarly, the present angle is determined i.e., the value of the angle substantially at the current or present time. The difference is then considered, which, if less than a threshold, may satisfy the third supervisory check. Should the difference be greater than the threshold, the distance element may not be considered to be able to reliably perform using polarization with memorized positive sequence voltage information and hence the third supervisory check is not deemed satisfied.

For distance elements there is the generally understood principle of direction. This refers to the direction of the fault along the electrical line relative to the relay. A forward fault denotes a fault forward of the relay along the electrical line. A reverse fault denotes a fault reverse to the relay along the electrical line. A user may desire a relay to only monitor and act on faults in a particular direction. In a fault condition in modem power supply systems, distance elements may unreliably determine direction under certain scenarios, for instance where renewables are integrated to the grid via power electronics. More specifically this tends to be a result of, during fault conditions, frequency excursions and time-varying harmonics being introduced into the power supply system when the various power electronics, with their own proprietary algorithms, are attempting to respond to the fault conditions. The fourth supervisory check proposed herein tends to ensure that the distance element is only allowed to output the control signal when the signal conditions are such that the distance element can reliably determine direction using emulated electromechanical disk behavior. The pre-set direction may be a forward or reverse direction, for instance.

Electromechanical relays themselves are known to comprise a disc that rotates when torque is applied. The rotation of the disc results in the closure of the relay contacts. If a voltage and current signal of different frequencies attempts to rotate an electromechanical disk in physical reality, an alternating sinusoidal torque is produced resulting in net-zero torque. In the context of a relay, this is the case where unstable signals are manifesting that would otherwise affect the distance element of a relay to accurately operate and isolate a fault. Accordingly, the electromechanical disk principle is emulated in the present method to provide a further supervisory check, the fourth supervisory check, for permitting a distance element to trigger the output of the control signal.

The third impedance characteristic and the predetermined period of time are applied in the methods disclosed herein to provide a second pathway or route through the computer-implemented method for triggering the output of the control signal and ultimately tripping the electrical line. This provides dependability of the relay. If a problem or fault persists on an electrical line for a period of time without the various supplementary conditions being satisfied, the distance element may still output the control signal to ensure the electrical line is isolated in view of the apparent fault persisting.

A Mho characteristic is well understood in the art and may be considered to be a circular shaped characteristic. A Quad characteristic is well understood in the art and may be considered to be a quadrilateral shaped characteristic.

The methods described herein tend to be able to be implemented as software within a relay and thus no additional hardware is required.

The methods described herein tend to use local information (available at the relay) to enable a relay to secure distance of a fault on an electrical line. Hence the methods tend to be deployable in scenarios where no secondary form of communication is available.

It will be appreciated that the first difference may be based on any quantities indicating incoherence between voltage and current, including the one or more phase quantities or one or more sequence quantities. It will be appreciated that the three-phase signal may be represented in sequence quantity. This may comprise a positive sequence, negative sequence, and zero sequence, component.

Measuring the three-phase voltage signal and the three-phase current signals of the electrical line may comprise measuring the three-phase voltage signal and the three-phase current signal using an electrical measurement means for the electrical line. The electrical measurement means may comprise a voltage transformer and/or current transformer, for instance.

The first and second threshold values may be settable by a user, may be a fixed quantity, or may be a relative quantity.

The preset direction may be a forward direction or a reverse direction.

The predetermined period of time may be settable by a user, may be a fixed value or may be adaptive. The term 'adaptive' as used here means that the period of time may be based on what the relay 'sees'. By way of example, if more noise is observed by the relay, then the period of time may be increased.

The third characteristic may encompass the first characteristic. For instance, the locus of the first characteristic may be entirely contained within the locus of the third characteristic.

An offset of the third characteristic may be settable by a user, may be a fixed offset, or may be a relative offset based on a forward reach of the first characteristic. A 'reach' of a relay refers to the impedance of the electrical line up to which the relay protects the electrical line from a fault.

The second characteristic may encompass the third characteristic. For instance, the locus of the third characteristic may be entirely contained within the locus of the second characteristic.

A forward and reverse reach of the second and third characteristics may be settable by a user, may be a fixed value, or may be relative with respect to a forward reach of the first characteristic.

Emulating the electromechanical disk may comprise using Equation 1 to represent the electromechanical disk behavior. In Equation 1, $\Delta\phi$ is an output of a directional comparator in degrees, $\Omega$ is a limit angle in degrees, K is a unitless variable that emulates a spring of the electromechanical disk.

$$E = \sum K \left\{ 1 - \frac{\Delta\phi}{\Omega} \right\} \qquad \text{Equation 1}$$

A directional comparator receives two inputs and compares the information (e.g., angle) to decide the direction. The limit angle may be a fixed angle (based on a user settable value) or adaptive (representing a Directional Characteristic Blinder).

The obtaining based on the three-phase voltage signal and the three-phase current signal, the at least one positive sequence voltage sample and at least one positive sequence current sample, may comprise: sampling the three-phase voltage signal to obtain the at least one positive sequence voltage sample; and sampling the three-phase current signal to obtain the at least one positive sequence current sample.

The computer implemented method described herein may be for use in at least one of: frequency domain phasor-based distance protection; time domain based distance protection; time domain based high frequency based or transient based distance protection, wherein the transient based distance protection optionally includes travelling wave based distance protection. The term 'travelling wave distance protection" may also be referred to herein as travelling wave protection. Expressed differently, the computer implemented method described herein may use the positive, negative, and/or zero sequence voltage and current phasors described herein, or may use the positive, negative, and/or zero sequence samples described herein, to enable use of the method with time domain, high frequency, transient or travelling wave-based distance protection applications.

According to a second aspect, there is provided a computer program comprising instructions which when executed by a processor of a relay, causes the relay to perform the method of the first aspect.

According to a third aspect, there is provided a non-transitory computer-readable storage medium comprising the computer program of the second aspect.

According to a fourth aspect, there is provided a relay for an electrical line, comprising at least one memory and at least one processor coupled with the at least one memory, wherein the at least one memory comprises instructions which when executed by the at least one processor causes the relay to perform the method of any preceding claim. The relay may be a distance relay. The relay may be deployed on an electrical line. The relay may be deployed in a power transmission network.

It will be appreciated that particular features of different aspects share the technical effects and benefits of corresponding features of other aspects of the invention. More specifically, the, computer program, non-transitory computer-readable medium, and relay, share the technical effects and benefits of the computer-implemented method.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments, examples and alternatives can be combined in any way and/or combination, unless such features are incompatible.

Brief description of the drawings

Embodiments of the invention will now be described by way of example only and with reference to the accompanying drawings, in which:

Figure 1 shows an example of a relay in accordance with aspects of the present disclosure.

Figure 2 shows an example of the relay of Figure 1 in a power transmission network.

Figure 3 shows an example of a method in accordance with aspects of the present disclosure.

Figure 4 shows an example of control logic for the relay of Figure 1.

Figure 5A shows an example of characteristics for the relay of Figure 1.

Figure 5B shows a further example of characteristics for the relay of Figure 1.

Figure 6A shows an example of supervisory checks providing permission for a relay to trip one or more components based on voltage and current signals.

Figure 6B shows an example of an apparent impedance, based on the voltage and current signals of Figure 6A.

Detailed description

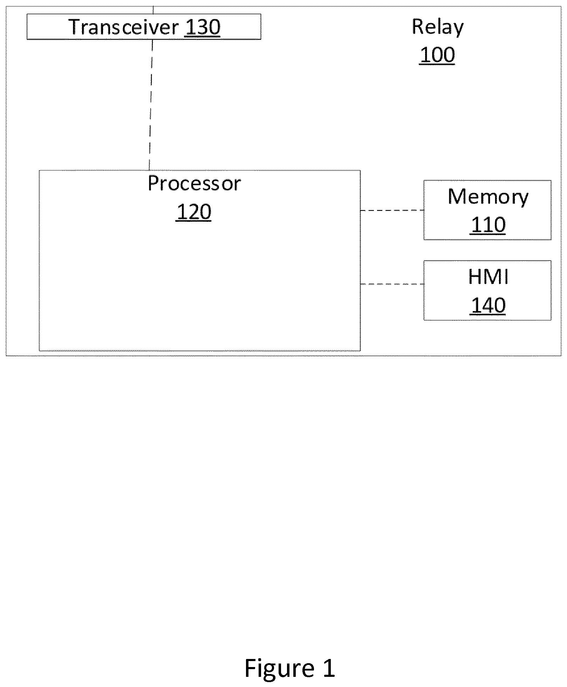

Figure 1 shows an example of a relay 100 for protecting an electrical line as may be used in implementing the invention described herein.

The relay 100 comprises a memory 110 and at least one processor 120. The memory 110 comprises computer-readable instructions, which when executed by the at least one processor 120, cause the relay 100 to perform the method/s described herein.

The memory 110 may be a computer readable storage medium. For instance, the memory 110 may include a non-volatile computer storage medium. For example, the memory 110 may include a hard disk drive, flash memory etc.

The relay 100 is shown as comprising a transceiver arrangement 130 which may comprise a separate transmitter and receiver. The transceiver arrangement 130 may be used to operatively communicate with other components or features of examples described herein either directly or via a further interface such as a network interface. The transceiver arrangement 130 may, for instance, send and receive control signals. The control signals may contain or define electrical control parameters such as reference currents or reference voltages.

The at least one processor 120 is capable of executing computer-readable instructions and/or performing logical operations. The at least one processor 120 may be a microcontroller, microprocessor, central processing unit (CPU), field programmable gate array (FPGA) or similar programmable controller.

The relay 100 may further comprise a human-machine interface (HMI) 140 such as a user input device and/or output device. Which may allow for visual, audible or haptic inputs/outputs. Examples include interfaces such as electronic displays, touchscreens, keyboards, mice, speakers and microphones.

The processor 120 may be communicatively coupled to the memory 110, the transceiver 130 and the human-machine interface 140.

The relay 100 is arranged to protect an electrical line 200.

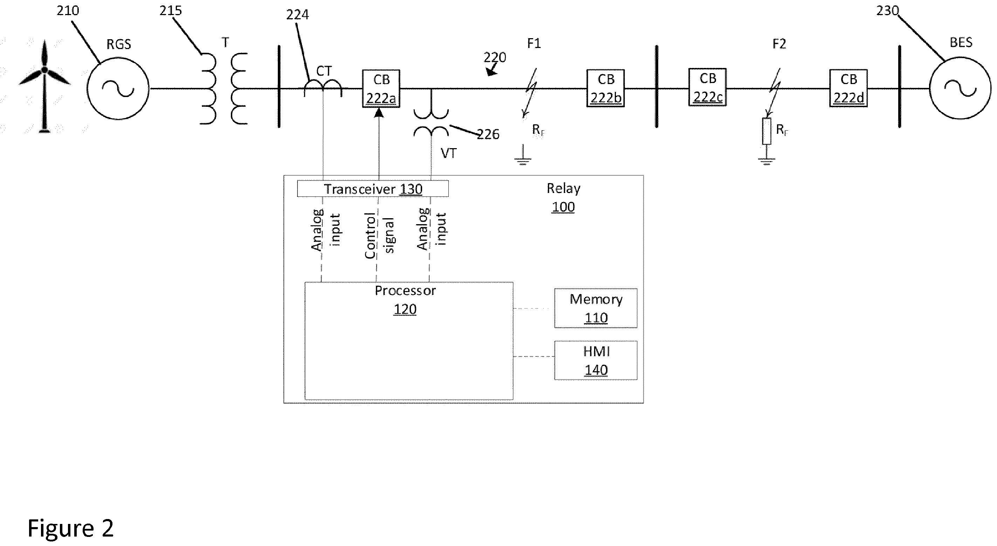

Figure 2 shows an example of the relay 100 of Figure 1 in a power transmission network 200.

The power transmission network 200 comprises a renewable power generation source (RGS) 210 connected to a bulk electrical system (BES) 230 via an electrical line 220. The renewable power generation source 210 interfaces with the electrical line via a step-up transformer (T) 215.

The electrical line 220 comprises a plurality of circuit breakers 222a, 222b, 222c, 222d. A current transformer 224 and a voltage transformer 226 are shown connected to the electrical line 220 either side of the circuit breaker 222a.

The relay 100 is connected to the current transformer 224, the circuit breaker 222a and to the voltage transformer 226. The relay 100 receives a measured three-phase current signal from the current transformer 224 via the transceiver 130. The relay 100 also receives a measured three-phase voltage signal from the voltage transformer 226. The relay 100 processes the measured signals and provides control signals, accordingly, to the circuit breaker 222a via the transceiver 130.

The relay 100 may be configured to protect the electrical line 220 forward of the circuit breaker 222a. Expressed differently, the relay 100 may protect the electrical line 220 between the circuit breaker 222a and the bulk electrical system 230. The relay 100 may protect only a portion of the electrical line 220 forward of circuit breaker 222a, for instance between the circuit breaker 222a and the circuit breaker 222b. For illustrative purposes, a fault F1 is shown with a fault resistance $R_F$ between the circuit breaker 222a and the circuit breaker 222b. As a result of the fault F1, a change in apparent impedance is observed by the relay 100. The fault F1, being forward of the circuit breaker 222a and within the protected region of the electrical line 220, causes the relay 100 to issue a control signal to circuit breaker 222a to trip. For further indicative purposes a further fault F2 is shown with a fault resistance $R_F$ between the circuit breaker 222c and circuit breaker 222d. This fault F2, whilst forward of the circuit breaker 222a, is not within the region of the electrical line 220 protected by the relay 100. Accordingly, the relay 100 does not issue a control signal to the circuit breaker 222a to trip. The relay 100 may alternatively issue control signals to any of circuit breakers 222a, 222b, 222c, 222d. A plurality of relays 100 may be used to control the different circuit breakers 222a, 222b, 222c, 222d. The relay 100 may be configured alternatively to protect regions of the electrical line 220 reverse to a controlled circuit breaker 222 (that is, between the controlled circuit breaker 222 and the renewable generation source 210).

The operation of the relay 100 described above allows for faulty sections of the electrical line 220 to be isolated from healthy sections of the electrical line 220. The manner in which the relay 100 determines whether to issue a control signal to the circuit breakers 222a, 222b, 222c, 222d will now be described in greater detail.

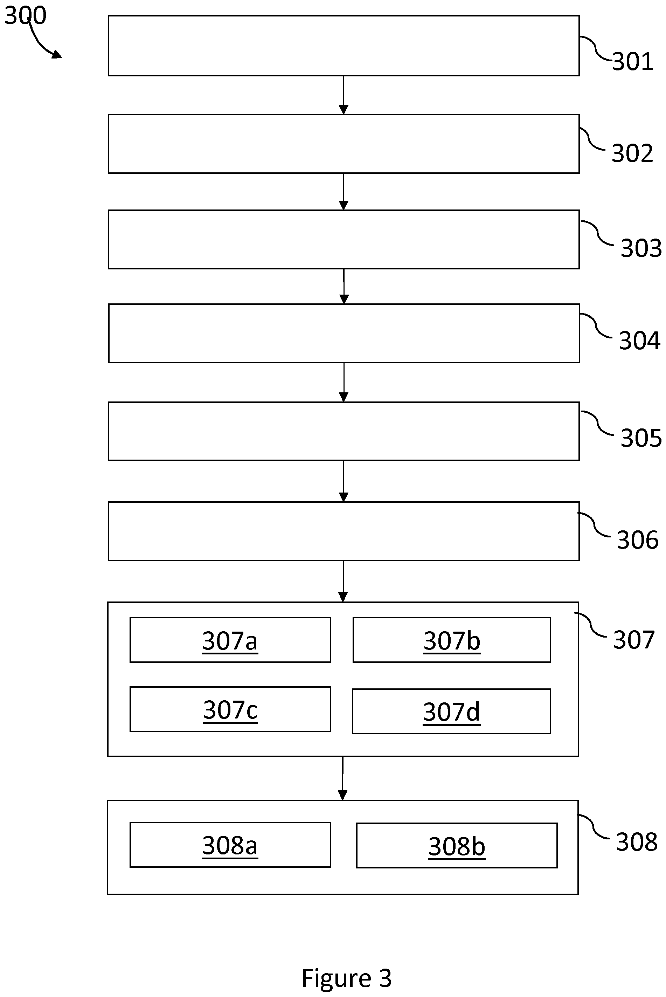

Figure 3 shows an example of a method 300 for controlling a relay 100 in accordance with aspects of the present disclosure. The method 300 may refer to features or components of Figures 1 and 2 for illustrative purposes.

Step 301 comprises monitoring the electrical line 220 by measuring a three-phase voltage signal and a three-phase current signal of the electrical line 220. The measuring may be performed using the voltage transformer 226 and the current transformer 224.

Step 302 comprises obtaining (i.e., determining), based on the three-phase voltage signal and the three-phase current signal: a positive sequence voltage phasor and a positive sequence current phasor; or at least one positive sequence voltage sample and at least one positive sequence current sample. One or more sequence quantities of the three-phase voltage signal and the three-phase current signal may be determined which may comprise at least one of: a currently measured value or a memorized value of the positive sequence voltage phasor or positive sequence voltage sample; a currently measured value or a memorized value of a negative sequence voltage phasor or negative sequence voltage sample; a currently measured value or a memorized value of a zero sequence voltage phasor or zero sequence voltage sample; a currently measured value or a memorized value of the positive sequence current phasor or positive sequence current sample; a currently measured value or a memorized value of a negative sequence current phasor or negative sequence current sample; and a currently measured value or a memorized value of a zero sequence current phasor or zero sequence current sample.

Step 303 comprises storing at least the positive sequence voltage phasor or the at least one positive sequence voltage sample.

Step 304 comprises determining first, second and third characteristics of the relay 100, wherein the first, second and third characteristics are based at least partly on one or more stored distance settings of the relay 100, one or more sequence quantities of the three-phase voltage signal and the three-phase current signal, and one or more phase quantities of the three-phase voltage signal and the three-phase current signal, wherein the first characteristic is a circular MHO characteristic or quadrilateral characteristic, wherein the second characteristic is a static circular MHO supervisory offset zone characteristic or static quadrilateral supervisory offset zone characteristic, wherein the third characteristic is a time-delayed circular MHO offset zone characteristic or time-delayed quadrilateral offset zone characteristic. The term 'time-delayed' in this context means that the decision made by this particular characteristic is not instantaneous, but the decision is delayed.

Step 305 comprises monitoring, based on the one or more sequence quantities and the one or more phase quantities, an apparent impedance seen by the relay 100. The apparent impedance may change as a result of the fault F1, for instance.

Step 306 comprises determining a fault when the apparent impedance enters the first characteristic of the relay 100.

Step 307 comprises determining whether a plurality of supervisory checks are satisfied, the plurality of supervisory checks being based at least partly on the one or more sequence quantities and the one or more phase quantities.

Step 308 comprises providing 308a a control signal for tripping one or more components 222a, 222b, 222c, 222d of the electrical line 220 if the fault is determined and all of the plurality of supervisory checks are determined to be satisfied, or, providing 308b the control signal if the apparent impedance enters into and remains within the third characteristic for a predetermined period of time.

The step 307 further comprises determining a first supervisory check 307a by determining the apparent impedance has entered into the second characteristic.

The step 307 further comprises determining a second supervisory check 307b by determining a first difference, the first difference being based on a positive sequence voltage angle and a positive sequence current angle, wherein the positive sequence voltage angle is based on the positive sequence voltage phasor, and the positive sequence current angle is based on the positive sequence current phasor, or the positive sequence voltage angle is based on the at least one positive sequence voltage sample, and the positive sequence current angle is based on the at least one positive sequence current sample; determining a rate of change of the first difference; and determining that a magnitude of the rate of change of the first difference is less than a first threshold value.

The step 307 further comprises determining a third supervisory check 307c by determining, based on the positive sequence voltage angles of present and previously stored positive sequence voltage phasors or positive sequence voltage samples, a second difference; and determining that a magnitude of the second difference is less than a second threshold value.

The step 307 further comprises determining a fourth supervisory check 307d by determining a directionality based on an emulated electromechanical disk behavior; and determining the directionality satisfies a preset direction.

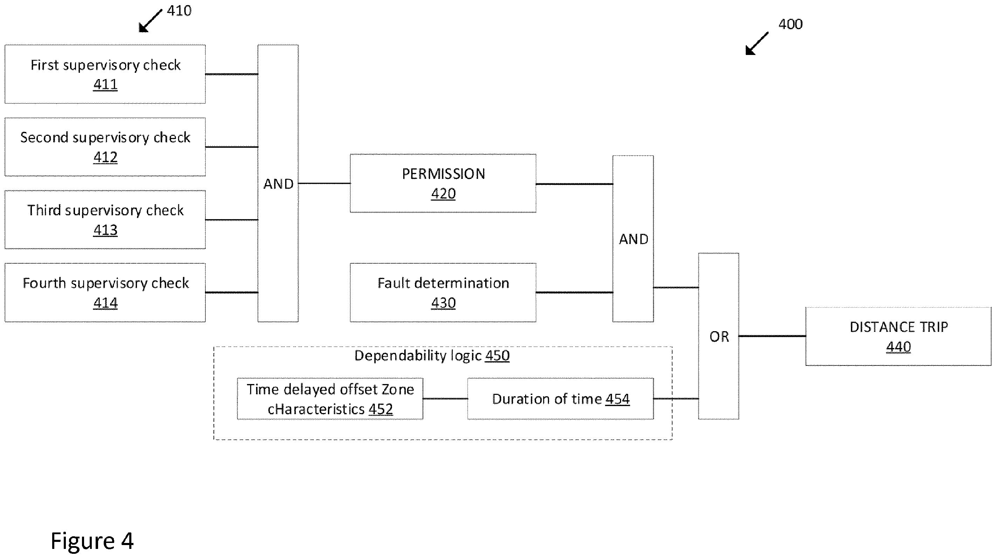

Figure 4 shows an example of control logic 400 as may be implemented by the relay 100 of Figure 1.

A plurality of supervisory checks 410 are shown. The plurality of supervisory checks 410 include the first supervisory check 411, second supervisory check 412, third supervisory check 413 and fourth supervisory check 414.

The first supervisory check 411 relates to the supervisory offset zone characteristic check referred to in step 307a in Figure 3.

The second supervisory check 412 relates to the rate of change of positive sequence voltage vs positive sequence current angle check referred to in step 307b in Figure 3.

The third supervisory check 413 relates to the comparison of stored/memorized positive sequence voltage angle vs present angle referred to in step 307c in Figure 3.

The fourth supervisory check 414 relates to the disk emulation referred to in step 307d of Figure 3.

The outcome of each check 411, 412, 413, 414 is ANDed together. If all of the checks 411, 412, 413, 414 are satisfied then a permission 420 is given. If any of the checks 411, 412, 413, 414 are not satisfied then the permission 420 is not given.

The control logic 400 shows that the permission 420 is ANDed with a fault determination 430. The fault determination 430 relates to the pre-determined impedance characteristic procedural step referred to in step 306 of Figure 3 i.e., the fault determination using traditional distance element technique. If a fault is determined 430 and the permission 420 has been given, then a distance trip 440 is output as per step 308a of Figure 3 (i.e., a control signal for tripping a circuit breaker is output).

The control logic 400 is also shown as including a dependability logic 450. The dependability logic 450 utilizes a time delayed offset zone characteristic 452 and pre-determined duration of time 454 (i.e., a timer) as also referred to in step 308b of Figure 3. If the dependability logic 450 is satisfied, then the distance trip 440 is also output as per step 308b of Figure 3. More specifically, the control logic 400 allows for a distance trip 440 when either all the supervisory checks 410 are satisfied, permission 420 is given and a fault determined 430, or, when the dependability logic 450 is satisfied.

The control logic 400 shows that distance for a relay can be secured via the supervisory checks 410, permission 420 and fault determination 430, but that dependability is also maintained via the dependability logic 450.

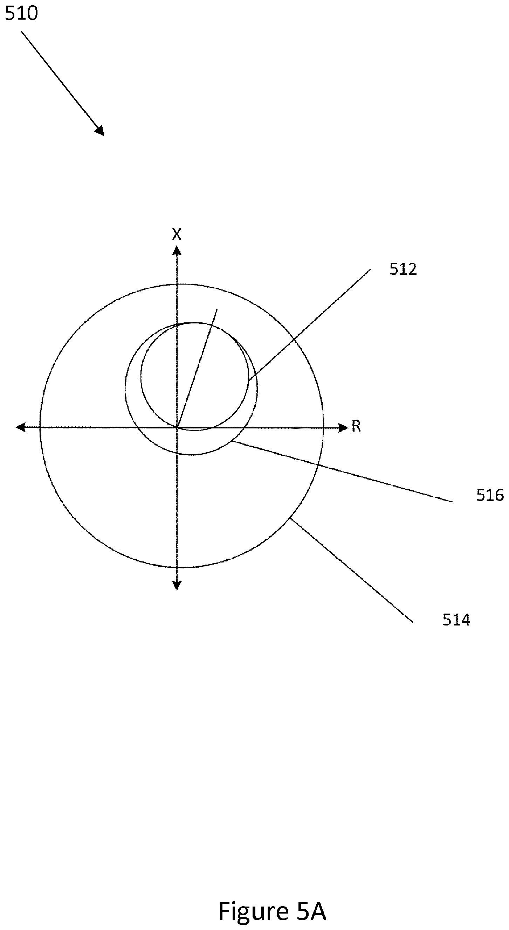

Figure 5A shows an example 510 of characteristics 512, 514, 516 in accordance with aspects of the disclosure herein. The characteristics 512, 514, 516 in the example 510 are shown as loci on a graph of X (reactance) against R (resistance).

A first characteristic 512 is shown. The first characteristic 512 is a circular MHO characteristic. The first characteristic 512 is a pre-determined characteristic. The first characteristic 512 is pre-determined by a user. If a monitored apparent impedance of an electrical line falls within the first characteristic 512, the user desires the relay using the first characteristic 512 to act to isolate the faulty section of an electrical line. If the apparent impedance is outside the locus of the first characteristic 512, a fault condition has not been established and the user does not wish the relay to act to isolate the electrical line.

A second characteristic 514 is shown. The second characteristic 514 is a circular MHO characteristic. The second characteristic 514 is a static circular MHO supervisory offset zone characteristic. The second characteristic 514 has a larger diameter than the first characteristic 512 in the example 510 and hence , however, it should be noted that the first characteristic 512 may be dynamic and change with time. In contrast the second characteristic 514 has a fixed diameter (i.e., is static). The second characteristic 514 is used in the first supervisory check referred to herein. For the first supervisory check to be satisfied, a monitored apparent impedance must be within the second characteristic 514.

A third characteristic 516 is shown. The third characteristic 516 is a circular MHO characteristic. The third characteristic 516 is a time-delayed circular MHO offset zone characteristic. The third characteristic 516 is used for dependability of a relay, to ensure a control signal is output for tripping one or more components of an electrical line when a monitored apparent impedance is within the third characteristic 516 for a pre-determined duration of time.

The third characteristic 516 has a larger diameter than the first characteristic 512 and is shown encompassing the first characteristic 512. The second characteristic 514 has a larger diameter than the third characteristic 516 and is shown encompassing the third characteristic 516.

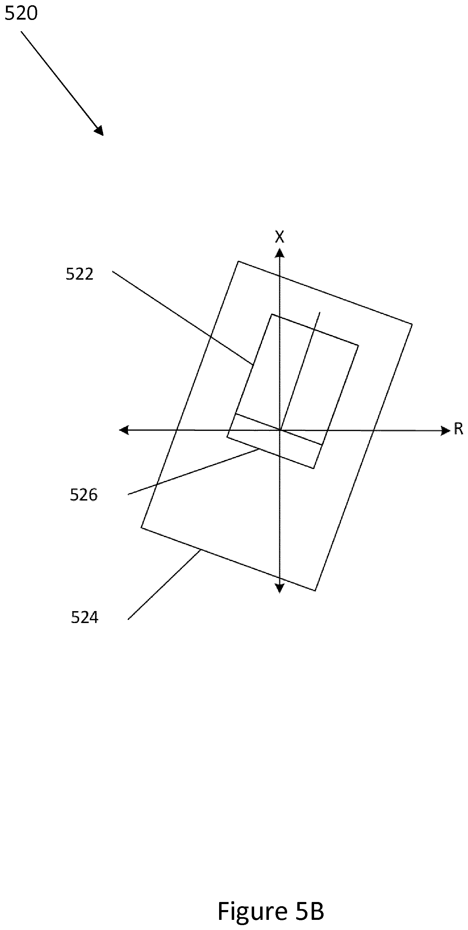

Figure 5B shows a further example 520 of characteristics 522, 524, 526 in accordance with aspects of the disclosure herein. The characteristics 522, 524, 526 in the example 520 are shown as loci on a graph of X (reactance) against R (resistance). The characteristics 522, 524, 526 are quad characteristics. Other than this specific difference, the characteristics 522, 524, 526 can be understood to correspond to the characteristics 512, 514, 516 with the related description above applying.

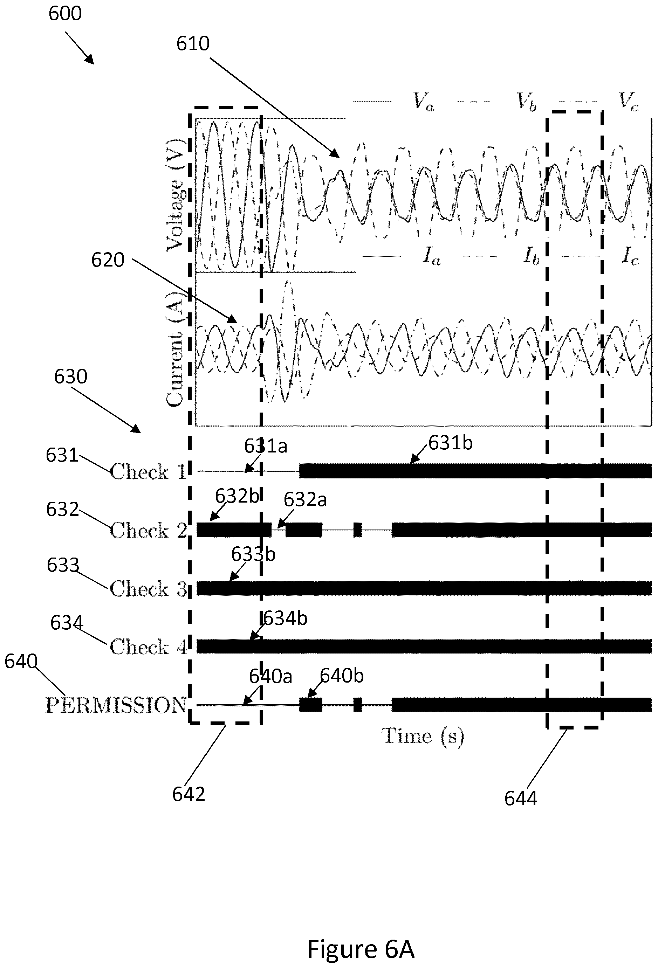

Figure 6A shows an example 600 of supervisory checks providing permission for a relay to trip one or more components of an electrical transmission system. The relay may be the relay 100 of Figures 1 and 2. The electrical line may be the electrical line 220 of Figure 2. The one or more components may be a circuit breaker such as circuit breaker 222a of Figure 2. The example 600 will now be described.

A three-phase voltage signal 610 is shown as may be measured by voltage transformer 226 of Figure 2. A three-phase current signal 620 is also shown as may be measured by current transformer 224 of Figure 2. The signals 610, 620 are shown as varying with time.

The status of a plurality of supervisory checks 630 are shown beneath the signals 610, 620 to demonstrate whether the checks 630 are satisfied or not satisfied, based on the monitored signals 610, 620, at each instant in time. The plurality of supervisory checks 630 may correspond to the plurality of checks 410 of Figure 4, for instance. In particular, first 631, second 632, third 633 and fourth 634 supervisory checks are shown.

The first supervisory check 631, shown as 'Check 1', corresponds to the step 307a of Figure 3 or first check 411 of Figure 4. The first supervisory check 631 is initially not satisfied 631a. This corresponds to an apparent impedance not being within the second characteristic i.e., not being within the static circular MHO supervisory offset zone characteristic 514 or static quadrilateral MHO supervisory offset zone characteristic 524 of Figure 5, for instance. It can be seen that the three-phase voltage signal 610 and three-phase current signal 620 are relatively stable at this time. Subsequently, however, a disturbance of the three-phase voltage signal 610 and three-phase current signal 620 is observed and the first supervisory check 631 becomes satisfied 631b. This corresponds to the apparent impedance entering into the second characteristic. The apparent impedance remains within the second characteristic and hence the first supervisory check 631 remains satisfied 631b.

The second supervisory check 632, shown as 'Check 2', corresponds to step 307b of Figure 3 or second check 412 of Figure 4. The second supervisory check 632 is initially satisfied 632b when voltage signal 610 and current signal 620 are stable. This corresponds to the rate of change of the first difference between positive sequence voltage angle and positive sequence current angle of the voltage signal 610 and current signal 620 having a magnitude less than a first threshold value. However, the second supervisory check 632 toggles between being satisfied 632b and not satisfied 632a as signals 610, 620 become disturbed. The second supervisory check 632 becomes satisfied 632b as the signals 610, 620 re-stabilize.

The third supervisory check 633, shown as 'Check 3', corresponds to step 307c of Figure 3. The third supervisory check 633 is satisfied 633b throughout the shown behavior of signals 610, 620. This corresponds to a second difference between positive sequence voltage angles of present and previously stored positive sequence voltage phasors or positive sequence voltage samples of voltage signal 610 being less than a second threshold value.

The fourth supervisory check 634, shown as 'Check 4', corresponds to step 307d of Figure 3. The fourth supervisory check 634 is satisfied 634b throughout the shown behavior of signals 610, 620. This corresponds to a directionality, determined based on emulated electromechanical disk behavior, satisfying a preset direction.

The example 600 also shows the permission status 640. The permission status 640 toggles between being satisfied 640b and not-satisfied 640a depending on when all of the supervisory checks 630 are satisfied and when at least one of the supervisory checks 630 is not satisfied. The permission status 640 corresponds to the permission 420 of Figure 4, for instance. By way of example, the region 642 is highlighted. It can be seen that the first supervisory check 631 is not satisfied, but the second 632, third 633 and fourth 644 supervisory checks are satisfied. In the region 642 the permission status 640 is not satisfied 640b. By way of further example, the region 644 is highlighted. It can be seen that all of the supervisory checks 641, 642, 643, 644 are satisfied. In the region 644 the permission status 640 is now satisfied.

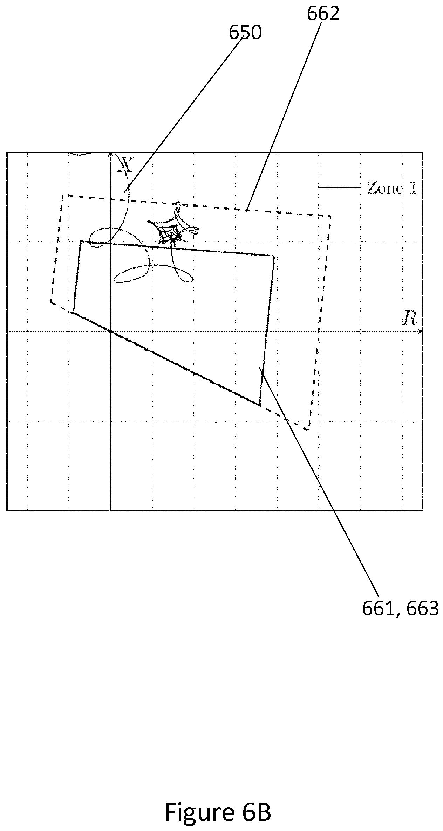

Figure 6B shows an apparent impedance 650 based on the voltage signal 610 and current signal 620 of Figure 6A. The apparent impedance 650 is shown on a graph of reactance 'X' and resistance 'R'. The apparent impedance 650 is shown initially being outside of the zone 2 characteristic 662 before entering into and remaining within the zone 2 characteristic 662. As shown in Figure 6A, the first supervisory check 631 resultantly is initially not satisfied 631a and then becomes satisfied 631b. The apparent impedance 650 is also within the first characteristic 661 for a period of time as well, indicating a fault condition. Provided that at this time all of the supervisory checks 630 are satisfied, permission will be given for outputting a control signal to trip a circuit breaker of an electrical line.

When distance relays are subjected to signals that are 'non-coherent' between voltage and current waveforms, especially when the frequency of the voltage and current are different or when there are time-varying harmonic-rich signals present, distance elements of said relays tend to mal-operate as shown in Figure 6B where zone 1 may respond for a zone 2 fault. The invention described herein tends to secure the distance element operation under such scenarios whilst maintaining dependability of the relay.

The invention described herein is particularly suitable for relays protecting electrical lines connected to unconventional sources such as renewable sources.

The invention described herein tends not to require a separate communication medium.

The invention described herein tends not to require additional hardware and can be implemented as a computer-implemented method i.e., algorithm or software update to pre-existing relays.

The invention described herein tends to monitor the rate of change of a particular signal, as a trigger, and emulates electromechanical disk behavior to release the distance.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed method and apparatus are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

Aspects of the present disclosure also relate to a system comprising: a computer processor operable to execute a set of computer-readable instructions; and a memory operable to store the set of computer-readable instructions operable to: receive, by a relay, one or more analog signals from a voltage transformer and a current transformer of a protected line; calculate, by the relay, voltage and current phase quantities, voltage and current sequence quantities, loop currents and loop voltages; determine, based on stored distance settings, one or more sequence quantities, one or more phase quantities, a residual compensation and source impedance ratio (SIR) quantity, a offset Quad or circular offset MHO characteristics of the relay; determine, based on the one or more sequence quantities, one or more phase quantities, one or more memorized sequence quantities, one or more memorized phase quantities, a rate of change; determine, based on the one or more sequence quantities, one or more phase quantities, one or more memorized sequence quantities, one or more memorized phase quantities, a difference; determine, based on stored distance settings, one or more sequence quantities, one or more phase quantities, electromechanical disk emulation, a directionality; compare an operating signal with a polarizing signal to see whether the apparent impedance is within the offset MHO or Quad characteristic; determining, using the rate of change, difference, directionality, offset MHO or Quad characteristic, a permission.

The rate of change, difference and offset MHO or Quad thresholds may be pre-determined absolute thresholds or relative thresholds or based on a logic or user setting.

The rate of change check may be asserted when the estimated rate of change is less than a pre-determined threshold.

The difference check may be asserted when the estimated difference is less than a pre-determined threshold.

The offset MHO or Quad characteristic may be asserted when the relative difference between the operating and polarizing signal is less than a pre-determined threshold.

The directional decision may be asserted when the relative difference between the operating and polarizing signal is less than a pre-determined threshold.

The decision may be made by emulating the electromechanical disk.

The distance protection may be further configured to use one or more phase quantities, one or more sequence quantities for polarization, or a combination thereof instead of or in addition to one of more memorized phase quantities or one or more memorized sequence quantities, when the difference check is not asserted.

The permission may be asserted only upon the assertion of rate of change check, difference check, directional check and offset MHO or quad characteristic.

Whilst the specific examples in the disclosure herein may refer to the use of phasors, the methodologies are not limited thereto. For instance the same or similar methodologies can be applied to the time-domain or to high-frequency or transient based protection or travelling wave type protection approaches as specified in the appended set of claims. For instance, the positive, negative and/or zero sequence voltage and current samples may be used in these approaches instead of the equivalent phasors.

## Claims

1. A computer-implemented method of controlling a relay for an electrical line, the method comprising:

monitoring the electrical line by measuring a three-phase voltage signal and a three-phase current signal of the electrical line;
obtaining, based on the three-phase voltage signal and the three-phase current signal:

a positive sequence voltage phasor and a positive sequence current phasor; or
at least one positive sequence voltage sample and at least one positive sequence current sample;

storing at least the positive sequence voltage phasor or the at least one positive sequence voltage sample;
determining first, second and third characteristics of the relay, wherein the first, second and third characteristics are based at least partly on one or more stored distance settings of the relay, one or more sequence quantities of the three-phase voltage signal and the three-phase current signal, and one or more phase quantities of the three-phase voltage signal and the three-phase current signal, wherein the first characteristic is a circular MHO characteristic or quadrilateral characteristic, wherein the second characteristic is a static circular MHO supervisory offset zone characteristic or static quadrilateral supervisory offset zone characteristic, wherein the third characteristic is a time-delayed circular MHO offset zone characteristic or time-delayed quadrilateral offset zone characteristic;
monitoring, based on the one or more sequence quantities and the one or more phase quantities, an apparent impedance seen by the relay; and
determining a fault when the apparent impedance enters the first characteristic of the relay;
wherein the method further comprises determining whether a plurality of supervisory checks are satisfied, the plurality of supervisory checks being based at least partly on the one or more sequence quantities and the one or more phase quantities; and
providing, a control signal for tripping one or more components of the electrical line if the fault is determined and all of the plurality of supervisory checks are determined to be satisfied, or, providing the control signal if the apparent impedance enters into and remains within the third characteristic for a predetermined period of time;
wherein the determining whether the plurality of supervisory checks are satisfied comprises:

determining a first supervisory check by determining the apparent impedance has entered into the second characteristic;
determining a second supervisory check by:

determining a first difference, the first difference being based on a positive sequence voltage angle and a positive sequence current angle, wherein:

the positive sequence voltage angle is based on the positive sequence voltage phasor, and the positive sequence current angle is based on the positive sequence current phasor; or
the positive sequence voltage angle is based on the at least one positive sequence voltage sample, and the positive sequence current angle is based on the at least one positive sequence current sample;

determining a rate of change of the first difference; and
determining that a magnitude of the rate of change of the first difference is less than a first threshold value;

determining a third supervisory check by:

determining, based on the positive sequence voltage angles of present and previously stored positive sequence voltage phasors or positive sequence voltage samples, a second difference; and
determining that a magnitude of the second difference is less than a second threshold value;

determining a fourth supervisory check by:

determining a directionality based on an emulated electromechanical disk behaviour; and
determining the directionality satisfies a preset direction.

2. The computer-implemented method of claim 1, wherein the measuring the three-phase voltage signal and the three-phase current signals of the electrical line comprises:
measuring the three-phase voltage signal and the three-phase current signal using an electrical measurement means for the electrical line.

3. The computer-implemented method of any preceding claim, wherein:

the first and second threshold values are settable by a user, or are a fixed quantity, or are a relative quantity; and/or
the preset direction is a forward direction or a reverse direction.

4. The computer-implemented method of any preceding claim, wherein the predetermined period of time is settable by a user, is a fixed value or is adaptive.

5. The computer-implemented method of any preceding claim, wherein the third characteristic encompasses the first characteristic.

6. The computer-implemented method of claim 5, wherein an offset of the third characteristic is settable by a user, is a fixed offset, or is a relative offset based on a forward reach of the first characteristic.

7. The computer-implemented method of any preceding claim, wherein the second characteristic encompasses the third characteristic.

8. The computer-implemented method of claim 7, wherein a forward and reverse reach of the second and third characteristics are settable by a user, are a fixed value, or are relative with respect to a forward reach of the first characteristic.

9. The computer-implemented method of any preceding claim, wherein the emulating the electromechanical disk behaviour comprises using the following equation to represent the electromechanical disk behaviour:

$$E = \sum K \left\{ 1 - \frac{\Delta\phi}{\Omega} \right\}$$

where,

$\Delta\phi$ is an output of a directional comparator in degrees,
$\Omega$ is a limit angle in degrees,
K is a unitless variable that emulates a spring of the electromechanical disk.

10. The computer-implemented method of any preceding claim, wherein the one or more sequence quantities of the three-phase voltage signal and the three-phase current signal comprise at least one of:

a currently measured value or a memorized value of the positive sequence voltage phasor or positive sequence voltage sample;

a currently measured value or a memorized value of a negative sequence voltage phasor or negative sequence voltage sample;
a currently measured value or a memorized value of a zero sequence voltage phasor or zero sequence voltage sample;
a currently measured value or a memorized value of the positive sequence current phasor or positive sequence current sample;
a currently measured value or a memorized value of a negative sequence current phasor or negative sequence current sample; and
a currently measured value or a memorized value of a zero sequence current phasor or zero sequence current sample.

11. The computer implemented method of any preceding claim, wherein the obtaining based on the three-phase voltage signal and the three-phase current signal, the at least one positive sequence voltage sample and at least one positive sequence current sample, comprises:

sampling the three-phase voltage signal to obtain the at least one positive sequence voltage sample; and
sampling the three-phase current signal to obtain the at least one positive sequence current sample.

12. The computer implemented method of any preceding claim for use in at least one of:

frequency domain phasor based distance protection;
time domain based distance protection;
time domain high frequency based or transient based distance protection, wherein the transient based distance protection optionally includes travelling wave based distance protection.

13. A computer program comprising instructions which when executed by a processor of a relay cause the relay to perform the method of any preceding claim.

14. A non-transitory computer-readable storage medium comprising the computer program of claim 13.

15. A relay for an electrical line, comprising:

at least one memory; and
at least one processor coupled with the at least one memory;
wherein the at least one memory comprises instructions which when executed by the at least one processor, cause the relay to perform the method of any one of claims 1-12.

| Transceiver 130 | Relay 100 |
| --- | --- |

| Processor 120 | Memory 110 |
| | HMI 140 |

Figure 1

Figure 2

Figure 3

400

410

First supervisory check
411

Second supervisory check
412

Third supervisory check
413

Fourth supervisory check
414

AND

PERMISSION
420

Fault determination
430

AND

OR

DISTANCE TRIP
440

Dependability logic 450

Time delayed offset Zone cHaracteristics 452

Duration of time 454

Figure 4

510

Figure 5A

520

Figure 5B

Figure 6A

Figure 6B

## EP 4 779 827 A1

**EUROPEAN SEARCH REPORT**

Application Number

EP 25 15 2180

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RADHAKRISHNAN ASHA ET AL: "Performance of Memory-Polarized Distance Relay in Presence of PV Generator with $V_{d_{C}}-Q$ Control", 2022 IEEE ENERGY CONVERSION CONGRESS AND EXPOSITION (ECCE), IEEE, 9 October 2022 (2022-10-09), pages 1-8, XP034234714, DOI: 10.1109/ECCE50734.2022.9947426 [retrieved on 2022-11-30] | 1,2,4-8, 10-13,15 | INV. H02H3/38 H02H3/40 H02H7/26 |
| A | * the whole document * | 3,9 | |
| A | EP 4 064 488 A1 (SCHWEITZER ENGINEERING LAB INC [US]) 28 September 2022 (2022-09-28) * paragraphs [0019] - [0022]; figures 1-11 * | 1-15 | |
| A | TSYLIN A. ET AL: "Optimization of distance protection performance used in wind farms' collection networks", IET CONFERENCE PROCEEDINGS, vol. 2022, no. 2, 10 May 2022 (2022-05-10), pages 43-48, XP093285932, ISSN: 2732-4494, DOI: 10.1049/icp.2022.0909 * sections I-III; figures 1-8 * | 1-15 | |

TECHNICAL FIELDS
SEARCHED (IPC)

H02H

The present search report has been drawn up for all claims

| Place of search | Date of completion of the search | Examiner |
|---|---|---|
| Munich | 17 June 2025 | Gomes Guerreiro, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 2180

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | Publication date |
|---|---|---|---|
| EP 4064488 A1 | 28-09-2022 | EP 4064488 A1 | 28-09-2022 |
| | | US 2022308103 A1 | 29-09-2022 |

EPO FORM P0459

For more details about this annex : see Official Journal of the European Patent Office, No. 12/82